# EUROPÄISCHE PATENTSCHRIFT

(11) **EP 2 345 039 B1**
(45) Veröffentlichungstag und Bekanntmachung des Hinweises auf die Patenterteilung: **29.05.2013**
(21) Anmeldenummer: 09763902.5
(22) Anmeldetag: 11.11.2009
(51) Int. Cl.: G21C 3/322, G21C 3/326, G21C 3/352

(54) **BRENNELEMENT FÜR EINEN DRUCKWASSERREAKTOR**
FUEL ASSEMBLY FOR A PRESSURIZED WATER REACTOR
ASSEMBLAGE COMBUSTIBLE POUR UN RÉACTEUR À EAU PRESSURISÉE

(30) Priorität: 13.11.2008 DE 102008043711; 28.04.2009 DE 102009002698
(43) Veröffentlichungstag der Anmeldung: 20.07.2011
(73) Patentinhaber: AREVA GmbH, 91052 Erlangen (DE)
(72) Erfinder: STABEL, Jürgen, 91058 Erlangen (DE); KIEHLMANN, Horst-Dieter, 91301 Forchheim (DE); DRESSEL, Bernd, 91052 Erlangen (DE)
(74) Vertreter: Meissner, Bolte & Partner
(86) Internationale Anmeldenummer: PCT/EP2009/064965
(87) Internationale Veröffentlichungsnummer: WO 2010/055048

(56) Entgegenhaltungen:
- DE-B3-102005 035 486
- US-A- 4 576 786
- US-A- 4 762 669
- US-A- 5 227 130

## Beschreibung

Die Erfindung bezieht sich auf ein Brennelement für einen Druckwasserkernreaktor.

Aus zahlreichen Inspektionsresultaten ist es bekannt, dass sich die Brennelemente eines Druckwasserkernreaktors im Laufe ihrer Einsatzdauer in Abhängigkeit von ihrer Position im Kern verbiegen, so dass sich für den gesamten Kern systematische Durchbiegemuster ergeben können. Ursachen hierfür können beispielsweise Anisotropien in der thermischen Längenausdehnung, ein durch radioaktive Strahlung induziertes Längenwachstum der Brennstabhüllrohre oder der Steuerstabführungsrohre oder Strömungskräfte sein, die durch quer zur Längsachse der Brennelemente gerichtete Ausgleichsströmungen erzeugt werden. Diese Durchbiegungen können im ungünstigen Fall zu einer Schwergängigkeit der Steuerstäbe oder zu Problemen beim Brennelementwechsel führen.

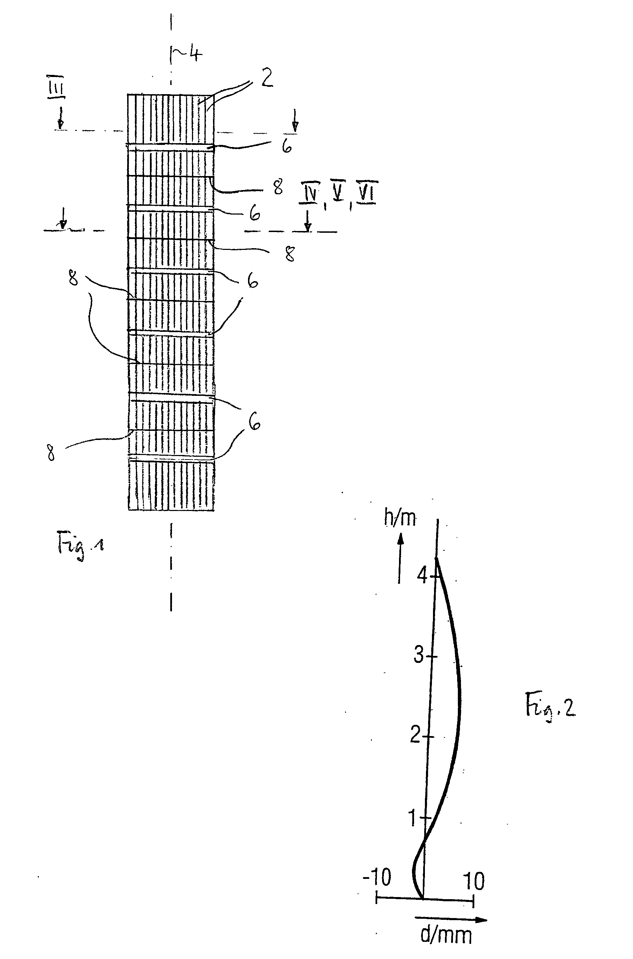

Eine solche in der Praxis beobachtete Durchbiegung oder Verbiegung eines Brennelementes ist im Diagramm der Fig. 2 dargestellt. In diesem Diagramm ist das Ausmaß der Durchbiegung d in mm gegen die Höhe h des Brennelements in m, gemessen von der unteren Stabhalteplatte an, aufgetragen, wie es sich beispielsweise für ein bestrahltes 18x18-Brennelement ergibt. Der Figur ist zu entnehmen, dass es sich hierbei im wesentlichen um eine C-bogenförmige Durchbiegung (Grundmode) handelt, die bis zu einem gewissen Ausmaß von Durchbiegungen mit höheren Moden, hauptsächlich vom nächsthöheren Mode in Form einer S-förmigen Durchbiegung überlagert ist.

Um das Ausmaß solcher Durchbiegungen zu verringern, wurde im Stand der Technik versucht, die Brennelemente mechanisch stabiler auszulegen und die Niederhaltekräfte zu verringern. Alternativ hierzu wird in der DE 10 2005 035 486 B3 vorgeschlagen, die in einem Brennelement vorhandenen Abstandhalter abhängig von ihrer Position im Brennelement konstruktiv unterschiedlich zu gestalten, wobei die Abstandhalter, die in einem oberen Bereich angeordnet sind, einen geringeren Strömungswiderstand gegen Querströmungen aufweisen als die in einem unteren Bereich angeordneten Abstandhalter. Diese Vorgehensweise beruht auf der Beobachtung, dass dem in Längs- oder Axialrichtung des Brennelementes strömenden Kühlwasser aufgrund der im Wesentlichen, eingangs erläuterten C-bogenförmigen Durchbiegung des Brennelementes Querströmungskomponenten aufgeprägt werden. Diese senkrecht zur Vertikalen verlaufenden Querströmungskomponenten sind im unteren Bereich des Brennelementes, d.h. in dem Bereich, in dem in Richtung des strömenden Kühlwassers gesehen das Ausmaß der Durchbiegung, d.h. die Auslenkung von einer vertikalen Ideallinie, zunimmt, den Querströmungskomponenten entgegengesetzt gerichtet, die sich aufgrund der nunmehr abnehmenden Auslenkung im Bereich oberhalb des Maximums der Auslenkung einstellen. Die Querströmungen üben somit im unteren Bereich auf das Brennelement eine Kraft aus, die das Ausmaß der Durchbiegung in diesem unteren Bereich reduziert, während die im oberen Bereich entgegengesetzt gerichteten Querströmungen eine Erhöhung der Durchbiegung verursachen, so dass sich in der Praxis die eingangs anhand von Figur 2 erläuterte Überlagerung der C-bogenförmigen Durchbiegung mit einer S-förmigen Durchbiegung ergibt. Die in der DE 10 2005 035 486 B3 vorgeschlagene Vorgehensweise beruht dementsprechend auf der Überlegung, dass das Ausmaß der im oberen Bereich entstehenden Kräfte und damit die Tendenz zur Instabilität und zum Ausbilden einer plastischen Verformung verringert ist, wenn die im oberen Bereich angeordneten Abstandhalter der Querströmung einen geringeren Strömungswiderstand entgegensetzen als die im unteren Bereich befindlichen Abstandhalter. Eine solche Vorgehensweise erfordert aber eine aufwändige Neukonstruktion der Abstandhalter.

Der Erfindung liegt nun die Aufgabe zu Grunde, ein Brennelement für einen Druckwasserkernreaktor anzugeben, das im Betrieb eine verringerte Durchbiegung aufweist und eine konstruktive Änderung der im jeweiligen Brennelement verwendeten Abstandhalter nicht erfordert.

Die genannte Aufgabe wird gemäß der Erfindung gelöst mit einem Brennelement mit den Merkmalen des Patentanspruches 1. Durch die Anbringung eines solchen strömungsführenden Strukturteils zwischen zwei Abstandhaltern wird das axial anströmende Kühlwasser vermehrt in den zwischen zwei benachbarten Brennelementen befindlichen Spalt gelenkt, der die größere Breite aufweist. Dadurch wird auf das Brennelement eine Querkraft ausgeübt, die zum breiteren Spalt hin gerichtet ist. Diese Querkraft bewirkt dann eine plastische Kriechverformung des Brennelementes, die zu einer Verringerung der Breite des breiten Spaltes auf der einen Seite des Brennelementes und einer Vergrößerung des schmalen Spaltes auf der anderen Seite führt.

Die Erfindung beruht dabei auf der Überlegung, dass wesentlicher Grund für die im Stand der Technik beobachtete Durchbiegung die Wechselwirkung zwischen dem strömenden Kühlwasser und dem Brennelement ist, wobei von dem innerhalb eines Abstandhalters im Brennelement strömenden Kühlwasser aufgrund konstruktiv bedingter Asymmetrien des in der Regel mit sogenannten Drall- oder Durchmischungsfahnen bestückten Abstandhalters selbst dann auf das Brennelement eine gerichtete Kraft ausgeübt wird, wenn das Brennelement und die ihm benachbarten Brennelemente noch keine Durchbiegung aufweisen. Diese konstruktiv bedingten Asymmetrien sind sowohl durch die Anordnung der Durchmischungsfahnen selbst als auch durch die innerhalb der Zellen des Abstandhalters befindlichen Noppen und Federelemente zur Lagerung des Brennstabes verursacht.

Die aufgrund dieser Asymmetrien wirkende gerichtete Kraft erzeugt im Betrieb eine gerichtete Durchbiegung des bzw. der Brennelemente, die eine in der DE 103 58 830 B3 näher erläuterte systematische Durchbiegung des Kerns bewirken. Durch die Einfügung eines oder mehrerer solcher Strukturteile gemäß der Erfindung ist es möglich, die Kräfte, die eine Durchbiegung der im Stand der Technik bekannten Brennelemente bewirken, bereits bei geringen Durchbiegungen weitgehend zu kompensieren bzw. zu minimieren, unabhängig davon, in welche Richtung die durch solche Asymmetrien verursachte Querkraft wirkt. Dies wird dadurch erreicht, dass die Strukturteile einen symmetrischen Aufbau derart aufweisen, dass durch das im Bereich des Strukturteils axial innerhalb des Brennelementes strömende Kühlwasser keine Querkräfte auf das Brennelement ausgeübt werden, wenn die Strömungsverhältnisse auf allen Seiten des Brennelementes identisch sind, d.h. die ihm benachbarten Brennelemente noch keine Durchbiegung aufweisen, sondern dass Querkräfte erst dann entstehen, wenn im Bereich des Strukturteils außerhalb des Brennelementes unterschiedliche Strömungsverhältnisse vorliegen, die durch unterschiedliche Spaltbreiten verursacht sind.

Darüber hinaus handelt es sich bei den Strukturteilen gemäß der vorliegenden Erfindung nicht um sogenannte Zwischengitter, wie sie im Stand der Technik als zusätzliche Mischgitter oder Stabilisierungsgitter bekannt sind, und die entweder ebenso viele Zellen wie die Abstandhalter aufweisen, durch die jeweils ein Brennstab oder ein Steuerstabführungsrohr geführt sind, oder bei denen, wie es bei dem aus der US 4,762,669 bekannten schwingungsdämpfenden Zwischengitter der Fall ist, zumindest die am Rand befindlichen Brennstäbe durch Zellen geführt und in diesen gelagert sind. Aus der US 4,576,786 ist es außerdem bekannt, als zusätzliche Mischgitter sogenannte Teilgitter zu verwenden, die nur ein Teilgebiet des Brennelementes umschließen und eine der Anzahl der in diesem Teilgebiet befindlichen Brennstäbe und Strukturrohre entsprechende Anzahl von Zellen umfassen.

So sind bei den Strukturteilen gemäß der Erfindung entweder keine Zellen oder allenfalls nur eine Anzahl von Zellen gebildet, die sehr viel kleiner ist als die Anzahl der Zellen der Abstandhalter, und die sich lediglich aus konstruktiven Gründen ergeben, wenn die Außenstege oder die gegebenenfalls vorhandenen Innenstege des Strukturteils an den Steuerstabführungsrohren oder anderen fest mit den Abstandhaltern verschweißten Strukturrohren im Brennelement fixiert, vorzugsweise mit diesen verschweißt werden. Darüber hinaus werden in den vom Strukturelement gebildeten Zellen die Brennstäbe nicht federnd mit Hilfe von Federelementen oder Vorsprüngen gelagert, wie dies bei dem aus der US 4,762,669 bekannten Zwischengitter der Fall ist. Vielmehr sind die Brennstäbe durch diese Zellen geführt, ohne die Zellenwände zu berühren.

Vorteilhafte Ausgestaltungen der Erfindung sind in den Unteransprüchen angegeben.

Zur weiteren Erläuterung der Erfindung wird auf die Zeichnung verwiesen. Es zeigen:
- Fig. 1: ein Brennelement gemäß der Erfindung in einer schematischen Prinzipdarstellung,
- Fig. 2: ein Diagramm, in dem die im Stand der Technik beobachtete Durchbiegung d eines Brennelementes gegen dessen Höhe h aufgetragen ist,
- Fig. 3: einen schematischen Querschnitt eines Brennelementes in der Draufsicht auf einen Abstandhalter,
- Fig. 4 bis 6: ebenfalls in einem schematischen Querschnitt eines Brennelementes eine Draufsicht auf unterschiedliche Ausführungsformen eines strömungsführenden Strukturteiles gemäß der Erfindung,
- Fig. 7: einen ausschnittsweisen Längsschnitt durch ein Brennelement mit einem strömungsführenden Strukturteil in der Ausgestaltung gemäß Fig. 4,
- Fig. 8: eine Draufsicht auf einen Außensteg eines in Figur 7 dargestellten strömungsführenden Strukturteiles in einer Draufsicht auf die Flachseite,
- Fig. 9: ebenfalls einen ausschnittsweisen Längsschnitt durch ein Brennelement mit einem gemäß Fig. 6 gestalteten strömungsführenden Strukturteil,
- Fig. 10: einen Kern eines Druckwasserkernreaktors in einem schematischen Längsschnitt mit einem durchgebogenen Brennelement,
- Fig. 11: eine Prinzipdarstellung einander benachbarter erfindungsgemäßer Brennelemente im Bereich eines Strukturteils gemäß der Erfindung,
- Fig. 12: einen Kern eines Druckwasserkernreaktors mit nebeneinander angeordneten gleichförmig durchgebogenen Brennelementen.

Gemäß Figur 1 umfasst ein Brennelement gemäß der Erfindung eine Vielzahl von Brennstäben 2, die sich parallel zueinander in Richtung einer Mittenlängsachse 4 erstrecken und in einer Mehrzahl von in Richtung dieser Mittenlängsachse beabstandeten Abstandhaltern 6 geführt sind. Zwischen den Abstandhaltern 6 ist jeweils ein strömungsführendes Strukturteil 8 angeordnet, das nicht zur Führung der Brennstäbe 2 dient und dessen Funktion nachfolgend näher erläutert wird. In der Figur sind alle Zwischenräume zwischen benachbarten Abstandhaltern 6 mit einem einzigen Strukturteil 8 versehen. Grundsätzlich kann jedoch im Brennelement zwischen benachbarten Abstandhaltern 6 auch eine Mehrzahl von Strukturteilen 8 angeordnet sein. Ebenso muss nicht jeder Zwischenraum zwischen benachbarten Abstandhaltern 6 ein solches Strukturteil 8 aufweisen. In einem solchen Fall werden die Strukturteile 8 vorzugsweise im oberen Bereich des Brennelementes angeordnet.

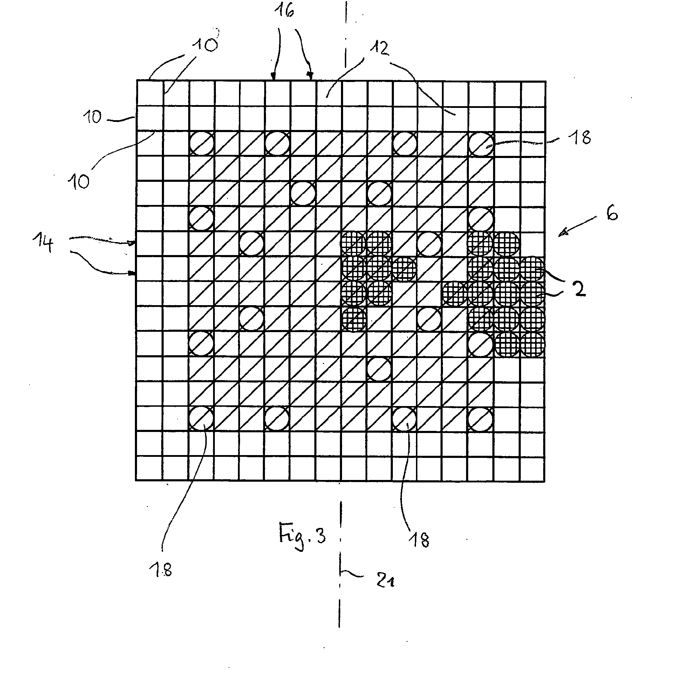

Die schematische Schnittdarstellung gemäß Fig. 3 zeigt einen Abstandhalter 6 in einer stark vereinfachten Draufsicht. Dieser Figur ist zu entnehmen, dass der Abstandhalter 6 ein aus Gitterstegen 10 aufgebautes quadratisches Gitter mit einer Vielzahl von quadratischen Zellen 12 bildet, die in Reihen 14 und Spalten 16 angeordnet sind. Durch eine Anzahl dieser Zellen 12 ist jeweils ein Steuerstabführungsrohr 18 (und im Ausführungsbeispiel der Figur nicht dargestellte, gegebenenfalls vorhandene Strukturrohre) hindurchgeführt, das mit den an ihm anliegenden Gitterstegen 10 verbunden, beispielsweise verschweißt ist. Durch die übrigen Zellen 12 sind jeweils die Brennstäbe 2 hindurchgeführt und in diesen radial federnd gelagert, von denen in der Figur aus Gründen der Übersichtlichkeit nur eine kleine Anzahl dargestellt ist. Die untereinander verschweißten Gitterstege 10 enthalten weitere, in der vereinfachten Darstellung der Figur nicht näher gezeigte Strukturelemente, beispielsweise Noppen und Federn zum Lagern der Brennstäbe 2 sowie strömungsführende Elemente, beispielsweise an ihrer Oberseite, d.h. an der im Einsatz dem strömenden Kühlwasser abgewandten Seite angeordnete Fahnen, um im Nachlauf des Abstandhalters 6 eine Durchmischung des Kühlwassers zu erzeugen. Darüber hinaus sind die am Rand befindlichen Gitterstege 10 mit in der Figur nicht dargestellten, schräg in das Innere des Brennelementes zeigenden Fahnen versehen, die ein verhaken der Brennelemente beim Brennelementwechsel verhindern sollen. Anstelle der in der Figur dargestellten einwandigen Gitterstege 10 können diese auch doppelwandig mit innenliegenden Strömungskanälen gestaltet sein, wie dies beispielsweise bei dem aus der EP 0 237 064 A2 bekannten Abstandhalter der Fall ist.

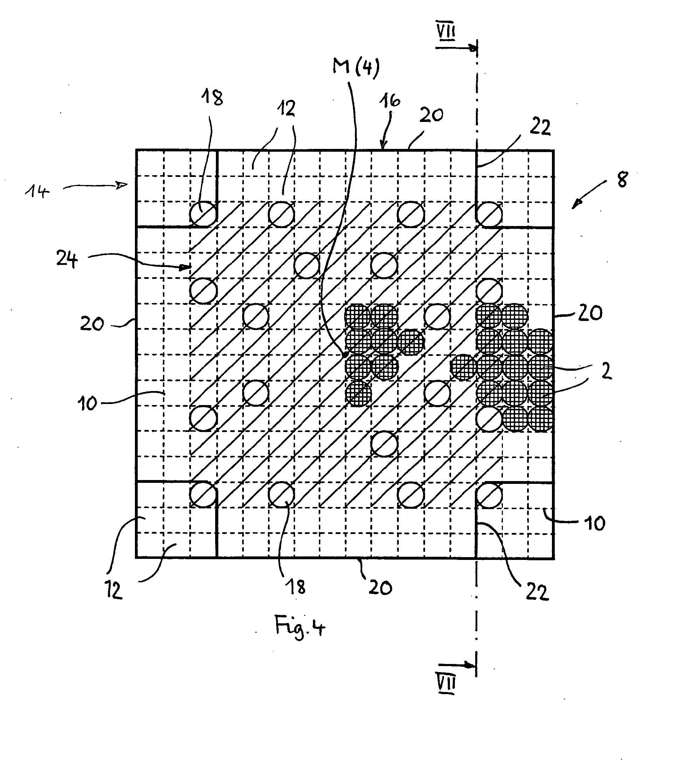

Bei dem in Figur 4 ebenfalls in einer schematischen Draufsicht dargestellten Ausführungsbeispiel eines strömungsführenden Strukturteils 8 gemäß der Erfindung ist zu erkennen, dass dieses im Wesentlichen ausschließlich aus vier Außenstegen 20 aufgebaut ist, die eine senkrecht zur Mittellängsachse 4 orientierte Ebene aufspannen und einen quadratischen Innenbereich des Brennelementes umgeben, dessen Mittelpunkt M auf der Mittenlängsachse 4 liegt. Im dargestellten Beispiel sind die Außensteg 20 am seitlichen Rand des Brennelementes angeordnet und bilden einen zusammenhängenden Rahmen, der alle Zellen 12 des Brennelementes umschließt. Grundsätzlich können die Außenstege 20 auch kürzer sein als die seitlichen Abmessungen des Brennelementes, und innerhalb des Brennelementes, beispielsweise eine Reihe 14 oder Spalte 16 beabstandet vom Rand angeordnet sein und auch in diesem Fall einen zusammenhängenden Rahmen bilden.

Die Außenstege 20 sind konstruktiv identisch und einander gegenüberliegende Außenstege 20 sind spiegelsymmetrisch bezüglich einer sich in Axialrichtung erstreckenden Mittenebene 21 angeordnet.

An den Außenstegen 20 sind leistenförmige Halterungen 22 fixiert, die mit Steuerstabführungsrohren 18 verschweißt sind, um auf diese Weise das Strukturteil 8 im Brennelement zu fixieren. Im Beispiel sind dies die Steuerstabführungsrohre 18, die an den Eckpunkten eines durch Schraffur hervorgehobenen quadratischen Innenbereichs 24 angeordnet sind, der durch die Steuerstabführungsrohre 18 festgelegt ist, wobei sich alle Steuerstabführungsrohre 18 innerhalb dieses Innenbereiches 24 befinden. Dementsprechend erstrecken sich die Halterungen 22 nur bis zu den an den Eckpunkten befindlichen Steuerstabführungsrohren 18 und sind somit kürzer als die in der Figur dargestellten Gitterstege 10. Die Halterungen 22 müssen nicht zwingend an die an den Eckpunkten des Innenbereichs 24 befindlichen Steuerstabführungsrohre 18 führen, sondern können grundsätzlich auch mit anderen am Rand oder innerhalb des Innenbereichs 24 befindlichen Steuerstabführungsrohren 18 verschweißt sein. Ebenso können je Außensteg auch anstelle von zwei Halterungen 22 auch eine oder mehr als zwei Halterungen 22 vorgesehen sein.

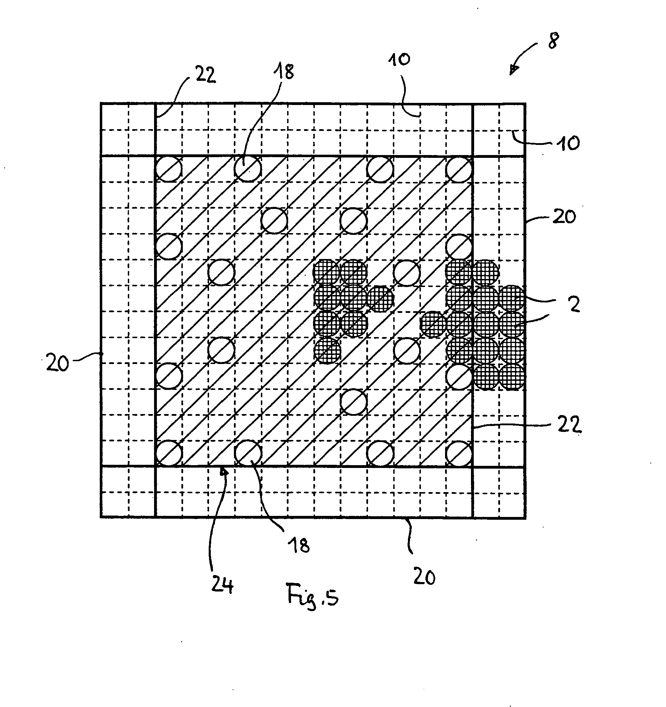

Im Ausführungsbeispiel gemäß Figur 5 sind die Halterungen 22 als schmale Stegbleche gestaltet, die parallel zu den schraffiert dargestellten innenliegenden Gitterstegen 10 am Rand des Innenbereiches 24 verlaufen und sich über die gesamte Breite des Brennelementes erstrecken, d. h. dieselbe Längenausdehnung wie die Gitterstege 10 haben.

In den Ausführungsbeispielen nach Figuren 4 und 5 sind durch die Strukturteile 8 keine den Zellen 12 der Abstandhalter entsprechende Zellen gebildet, durch die jeweils nur ein einziger Brennstab 2 geführt ist.

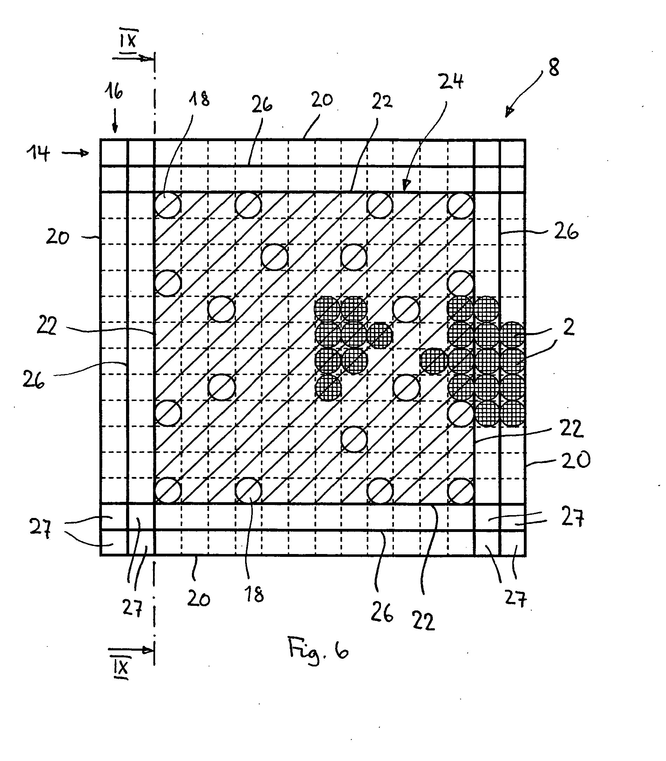

Im Ausführungsbeispiel gemäß Figur 6 sind zusätzlich parallel zu jedem am seitlichen Rand des Brennelementes angeordneten Außensteg 20 im Abstand von jeweils einer Reihe 14 bzw. einer Spalte 16 Innenstege 26 vorgesehen, die untereinander, mit den Außenstegen 20 und den ebenfalls als Stegbleche gemäß Fig. 5 ausgeführten Halterungen 22 verschweißt sind und ebenfalls einen zusammenhängenden Rahmen ergeben, der einen quadratischen Innenbereich des Brennelementes umgibt. Die Halterungen 22 und die Innenstege 26 bilden in den Eckbereichen des Brennelementes jeweils vier Zellen 27, durch die jeweils ein Brennstab geführt ist. Die Anzahl der durch das Strukturelement 8 gebildeten Zellen 27 ist dabei stets signifikant kleiner als die Gesamtzahl der Brennstäbe im Brennelement, um den durch das Strukturteil 8 erzeugten Strömungswiderstand möglichst gering zu halten.

Alternativ zu der in der Figur dargestellten Ausführungsform können die Innenstege 26 auch mit den kurzen Halterungen 22 der Fig. 4 kombiniert werden.

In allen Ausführungsbeispielen ist die Anzahl der durch das Strukturelement 8 gebildeten Zellen 27, die sich in einer Reihe 14 bzw. Spalte 16 befinden, kleiner als die Anzahl der in dieser Reihe 14 bzw. Spalte 16 sich jeweils befindenden Brennstäbe. Mit anderen Worten: Die Anzahl der zwischen Außensteg 20, gegebenenfalls vorhandenem Innensteg 26 und Halterungen 22 eingeschlossenen Brennstäbe 2 ist signifikant größer als die vom Strukturteil 8 gegebenenfalls gebildeten Zellen 27.

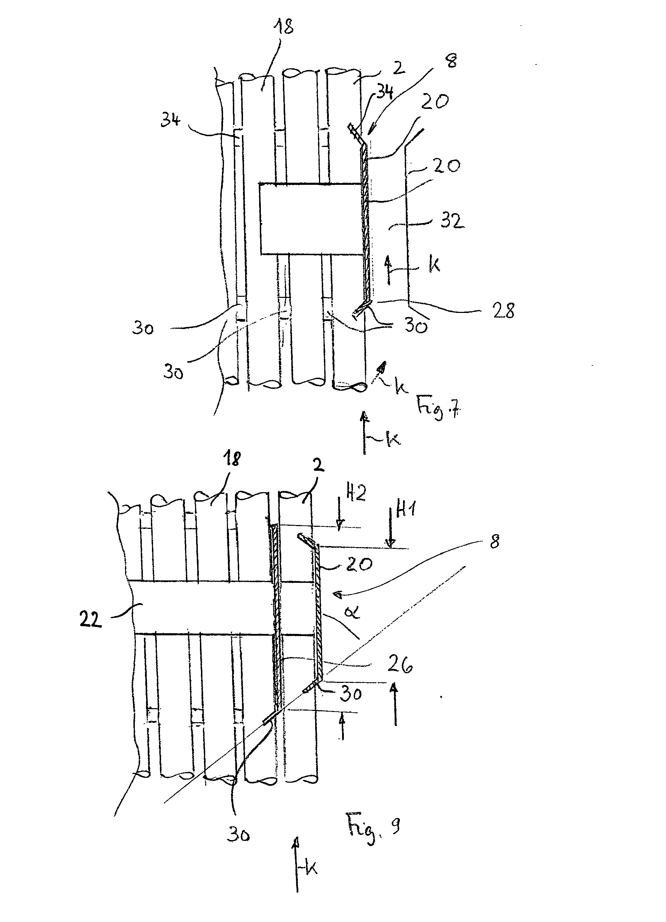

In Figur 7 ist zu erkennen, dass jeder Außensteg 20 des in Figur 4 dargestellten Strukturteiles 8 an seiner Unterkante 28, d.h. seiner im Betriebszustand dem nach oben strömenden Kühlwassers K zugewandten Längsseite mit Ablenkfahnen 30 versehen ist, die in das Innere des Brennelementes weisen. Diese Ablenkfahnen 30 ragen in Zwischenräume oder Spalte, die sich zwischen den am Rand des Brennelementes angeordneten Brennstäben 2 befinden. Sie dienen dazu, das Kühlwasser K in einen zwischen benachbarten Brennelementen von den Außenstegen 20 gebildeten Spalt 32 einzuleiten. In der Figur ist der Außensteg 20 eines benachbarten Brennelementes schematisch angedeutet. Der Figur 7 ist außerdem zu entnehmen, dass der Außensteg 20 mit einer als schmales Blech gebildeten Halterung 22 an einem Steuerstabführungsrohr 18 verschweißt ist. Die Höhe des Bleches ist dabei vorzugsweise kleiner als die Höhe der in den Abstandhaltern verwendeten Gitterstege, um den durch die zusätzlichen Strukturteile erzeugten Strömungswiderstand bei hinreichender Stabilität auf ein Minimum zu reduzieren.

Die obere Längsseite des Außensteges 20 ist vorzugsweise ebenso wie die untere Längsseite mit nach innen weisenden Fahnen 34 versehen, die anders als die unteren Ablenkfahnen 30 in erster Linie als Gleitschrägen zum Erleichtern des Ein- und Ausbauens der Brennelemente in den bzw. aus dem Kern dienen.

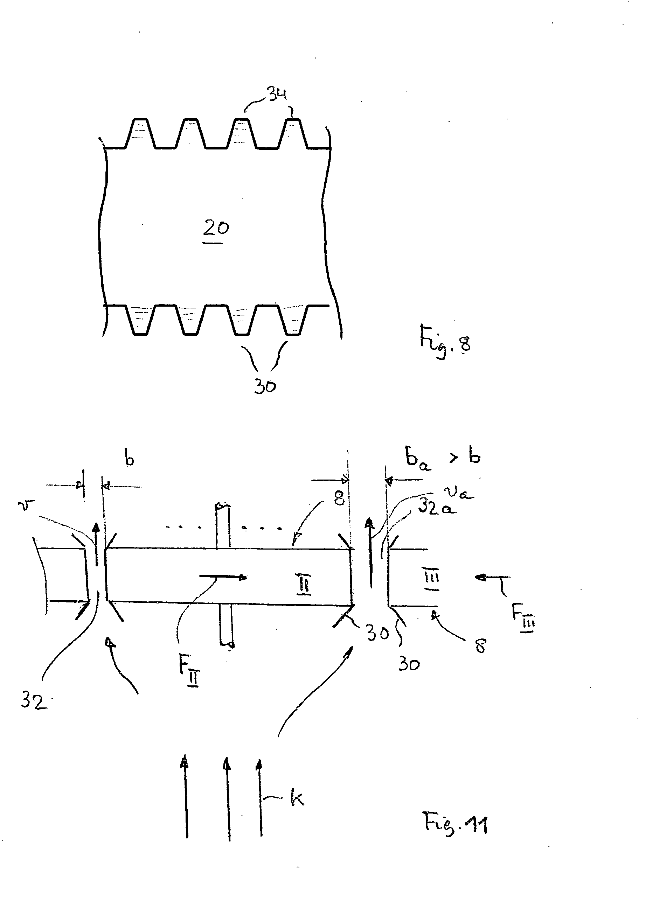

In der Draufsicht auf einen Außensteg 20 gemäß Figur 8 ist zu erkennen, dass die an den Längsseiten angeordneten Ablenkfahnen 30 bzw. Fahnen 34 eine trapezähnliche Gestalt aufweisen.

Der Figur 9 ist zu entnehmen, dass der dem Außensteg 20 im Ausführungsbeispiel gemäß Figur 6 benachbarte Innensteg 26 an seiner unteren Längsseite ebenfalls mit in das Innere des Brennelementes weisenden Ablenkfahnen 30 versehen ist.

Die Höhe H1 des Außensteges 20 ist vorzugsweise kleiner als die Höhe H2 des Innensteges 26. Die Höhenunterschiede sind mit den Abmessungen und Neigungswinkeln α der Ablenkfahnen 30 derart aufeinander abgestimmt, dass diese annähernd in einer gemeinsamen Ebene liegen, um auf diese Weise eine effiziente Ablenkung des von unten anströmenden Kühlwassers K in den zwischen Außenstegen 20 benachbarter Brennelemente liegenden Spalt zu bewirken.

Sowohl die Außenstege 20 als auch die Innenstege 26 sind jeweils konstruktiv identisch und spiegelsymmetrisch zu einer sich in Axialrichtung erstreckenden Mittenebene des Brennelementes aufgebaut, so dass die von diesen durch Ablenkung des von unten anströmenden Kühlwassers auf das Brennelement ausgeübten Querkräfte sich gegenseitig kompensieren, wenn die Strömungsverhältnisse an allen Seiten des Brennelementes identisch sind.

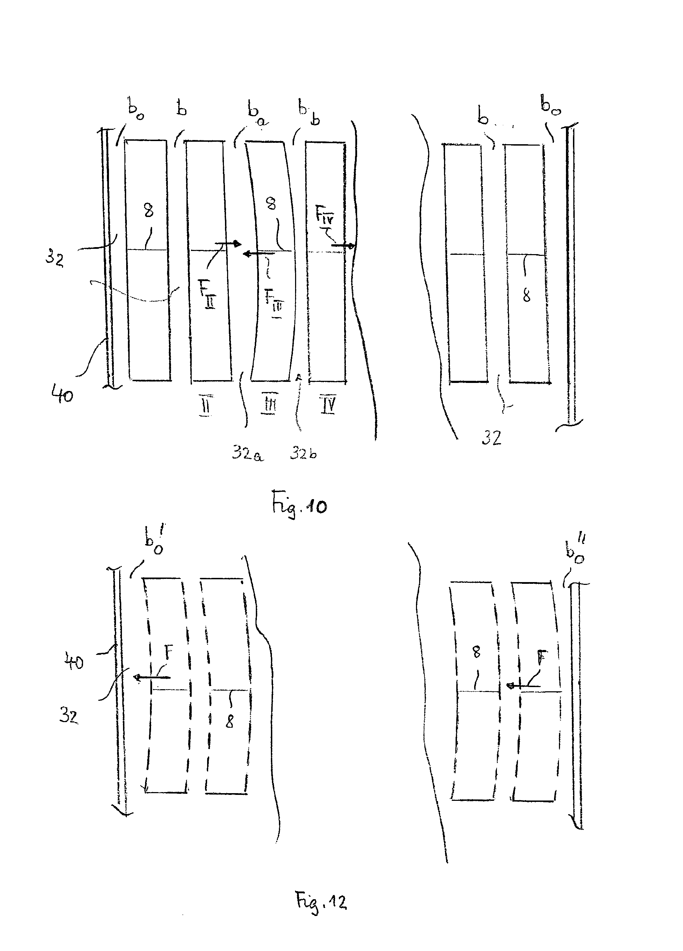

Die Wirkungsweise eines mit einem erfindungsgemäßen Strukturteil 8 versehenen Brennelementes ist schematisch in den Figuren 10 bis 12 für einen idealisierten Kern eines Druckwasserkernreaktors veranschaulicht, dessen Brennelemente konstruktiv derart ausgelegt sind, dass für den Fall, dass alle Brennelemente im Kern keine Biegung aufweisen und die zwischen den Brennelementen befindlichen Spalte gleich groß sind, durch das axial im und neben einem solchen idealen oder equilibrierten Brennelement strömende Kühlwasser keine hydraulischen Querkräfte auf das Brennelement ausgeübt werden.

Figur 10 zeigt nun eine Situation, in der eines der im Kern angeordneten Brennelemente, im Beispiel das an der Position III befindliche Brennelement eine typische initiale Durchbiegung aufweist, wie sie bei realen Brennelementen beobachtet wird, während die übrigen in einer Reihe jeweils benachbarten idealen Brennelemente noch eine geradlinige Gestalt haben. In dieser idealisiert dargestellten Situation weisen die Spalte zwischen den geradlinigen Brennelementen jeweils die gleiche Breite b und zwischen einer Kernumfassung 40 und den am Rand des Kerns befindlichen Brennelementen die Breite b₀ auf. Aufgrund der Durchbiegung des Brennelementes in der Position III weisen die Spalte 32a,b zwischen diesem und den benachbarten Brennelementen in den Positionen II bzw. IV Spaltbreiten bₐ ≠ b_{b} auf. Diese unterschiedlichen Spaltbreiten bₐ>b und b_{b}<b bewirken nun auf die Brennelemente in den Positionen II bzw. IV eine nach rechts gerichtete Kraft F_{II} bzw. F_{IV}, während auf das Brennelement in der Position III eine nach links gerichtete Kraft F_{III} wirkt.

Dies ist für die Brennelemente in den Positionen II und III in Figur 11 näher veranschaulicht. Das von unten anströmende Kühlwasser K wird durch die ins Innere des Strukturteils 8 geneigten Ablenkfahnen 30 beschleunigt. Dabei wird das Kühlwasser K bevorzugt in Richtung des breiteren Spaltes 32a strömen, da dessen hydraulischer Widerstand kleiner ist als der hydraulische Widerstand des schmäleren Spalts 32. In diesem schmäleren Spalt 32 strömt demzufolge des Kühlwasser K mit einer niedrigeren Geschwindigkeit v<vₐ als im Spalt 32a. Dies hat zur Folge, dass im breiteren Spalt 32a ein niedrigerer Druck herrscht als im Spalt 32, so dass auf das Brennelement in Position II eine in der Figur nach rechts gerichtete Kraft F_{II} ausgeübt wird. Entsprechend wirkt auf das in Position III befindliche Brennelement eine nach links gerichtete Kraft F_{III}.

Die auf die Brennelemente in den Positionen II und IV wirkenden Kräfte F_{II} bzw. F_{IV} würden nun zu einer Durchbiegung der ehemals nicht durchgebogenen Brennelemente führen, die sich auf alle Brennelemente des Kerns fortpflanzen würde, bis in einem Gleichgewichtszustand alle Brennelemente eine gleichgerichtete C-bogenförmige Durchbiegung aufweisen würden, wie dies in Figur 12 anhand der gestrichelt dargestellten Brennelemente veranschaulicht ist.

Eine solche gleichgerichtete Durchbiegung würde wiederum dazu führen, dass sich gemäß Figur 12 der zwischen dem Brennelement in der Position I und der Kernumfassung 40 befindliche Spalt 32 auf eine Breite b₀'>b₀ vergrößern würde. Dementsprechend würde der Spalt 32 zwischen dem sich am rechten Rand befindlichen Brennelement und der Kernumfassung 40 auf eine Breite b₀"<b₀ verkleinert werden. Auf diese Weise würden auf die äußeren Brennelemente im dargestellten Beispiel jeweils nach links gerichtete Kräfte F wirken, die dem vorstehend genannte Effekt entgegenwirken, so dass durch die von der Kernumfassung 40 geschaffene Randbedingung eine Gleichgewichtssituation im Kern herbeigeführt wird, in der alle Brennelemente eine weitgehend geradlinige Ausrichtung zurückgewinnen oder erneut erhalten. Dieser Selbstbegradigungsprozess kommt offensichtlich dann zum Stehen, wenn alle Spalte, d.h. sowohl die Spalte zwischen benachbarten Brennelementen als auch zwischen den am Rand des Kerns befindlichen Brennelementen und der Kernumfassung annähernd gleich groß sind.

Die in Figuren 10 und 12 dargestellte Situation gibt idealisierte Verhältnisse wieder, die entsprechend ideale Brennelemente voraussetzen, bei denen die im Stand der Technik beobachteten, hydraulisch verursachten Effekte nicht auftreten. Werden die im Stand der Technik bekannten Brennelemente, bei denen die eingangs geschilderten hydraulisch verursachten Querkräfte auch bei geradliniger Ausrichtung und identischen Spaltbreiten auftreten mit Strukturteilen 8 gemäß der Erfindung bestückt, können Durchbiegungen zwar nicht vollständig vermieden zumindest aber auf ein tolerierbares Maß verringert werden. Eine solche, die Durchbiegung der Brennelemente eines Kerns verringernde Wirkung wird bereits dann ausgeübt, wenn nur ein Teil des Kerns mit Brennelementen gemäß der Erfindung bestückt ist bzw. nicht alle der im Kern befindlichen Brennelemente ein oder mehrere Strukturteile 8 gemäß der Erfindung aufweisen.

Wesentlicher Grundgedanke der vorliegenden Erfindung ist dabei, dass durch die Anwesenheit der erfindungsgemäßen strömungsführenden Strukturteile 8 bei Auftreten einer Durchbiegung und dem Auftreten unterschiedlicher Spaltbreiten auf die Brennelemente eine hydraulisch verursachte Kraft ausgeübt wird, die der die Durchbiegung erzeugenden Kraft entgegengesetzt ist, so dass sich in einem Gleichgewichtszustand nur unkritische Durchbiegungen einstellen können und der gesamte Kern immer die Tendenz hat, sich gerade auszurichten.

## Patentansprüche

1. Brennelement für einen Druckwasserkernreaktor, mit folgenden Merkmalen:
a) eine Vielzahl von Brennstäben (2) ist in einer Mehrzahl von in Richtung einer Mittenlängsachse (4) beabstandeten Abstandhaltern (6) geführt,
b) die Abstandhalter (6) bilden jeweils ein aus Gitterstegen (10) aufgebautes quadratisches Gitter mit einer Vielzahl von Zellen (12),
c) die Zellen (12) sind in Reihen (14) und Spalten (16) angeordnet,
d) zumindest zwischen zwei einander axial benachbarten Abstandhaltern (6) ist ein strömungsführendes Strukturteil (8) angeordnet,
e) das strömungsführende Strukturteil (8) umfasst vier Außenstege (20), die in einer senkrecht zur Mittenlängsachse (4) orientierten Ebene einen quadratischen Innenbereich (24) umgeben, dessen Mittelpunkt (M) auf der Mittenlängsachse (4) liegt,
f) die Außensteg (20) sind an ihrer im Betriebszustand dem strömenden Kühlwasser zugewandten unteren Längsseite mit zum Innenbereich weisenden Ablenkfahnen (30) versehen,
g) die Außenstege (20) sind konstruktiv identisch und einander gegenüberliegende Außensteg (20) sind spiegelsymmetrisch bezüglich einer sich in Axialrichtung erstreckenden Mittenebene (21) angeordnet,
h) das strömungsführende Strukturteil (8) bildet höchstens für eine Anzahl von Brennstäben (2), die kleiner ist als deren Gesamtzahl im Brennelement, Zellen (27), durch die jeweils ein Brennstab (2) geführt ist, wobei
i) die Anzahl dieser Zellen (27), die sich in einer Reihe (14) oder Spalte (16) befinden, kleiner ist als die Anzahl der in dieser Reihe (14) bzw. Spalte (16) jeweils befindlichen Brennstäbe.

2. Brennelement nach Anspruch 1, bei dem sich die vom Strukturteil (8) gebildeten Zellen (27) ausschließlich in Eckbereichen des Brennelements befinden.

3. Brennelement nach Anspruch 1 oder 2, bei dem die Außenstege (20) am seitlichen Rand des Brennelementes angeordnet sind.

4. Brennelement nach Anspruch 1, 2 oder 3, bei dem die Außenstege (20) einen zusammenhängenden Rahmen bilden.

5. Brennelement nach einem der Ansprüche 1 bis 4, bei dem jedem Außensteg (20) ein parallel zu diesem verlaufender Innensteg (26) zugeordnet ist, der an seiner dem strömenden Kühlwasser (K) zugewandten unteren Längsseite mit zum Innenbereich (24) weisenden Ablenkfahnen (30) versehen ist, wobei die Innenstege (26) konstruktiv identisch und einander gegenüberliegende Innenstege (26) spiegelsymmetrisch bezüglich einer sich in Axialrichtung erstreckenden Mittenebene (21) angeordnet sind.

6. Brennelement nach Anspruch 5, bei dem zwischen Außensteg (20) und Innensteg (26) nur Brennstäbe (2) einer Reihe (14) bzw. Zeile (16) angeordnet sind.

7. Brennelement nach Anspruch 5 oder 6, bei dem die untere Längsseite des Innensteges (26) unterhalb der unteren Längsseite des Außensteges (20) angeordnet ist.

8. Brennelement nach einem der Ansprüche 5 bis 7, bei dem die Innenstege (26) einen zusammenhängenden Rahmen bilden.

## Claims

1. Fuel assembly for a pressurised-water nuclear reactor, having the following features:
a) a plurality of fuel rods (2) are guided in a plurality of spacers (6) that are spaced apart in the direction of a central longitudinal axis (4),
b) The spacers (6) each form a square grid made from grid webs (10), having a plurality of cells (12),
c) the cells (12) are arranged in rows (14) and columns (16),
d) a flow-guiding structural part (8) is arranged at least between two spacers (6) that are spaced apart from each other axially,
e) the flow-guiding structural part (8) comprises four outer webs (20) that surround a square inner region (24) in a plane that is orientated perpendicular to the central longitudinal axis (4), the centre point (M) of which is located on the central longitudinal axis (4),
f) the outer webs (20) have deflector vanes (30) pointing towards the inner region added to them on their lower longitudinal side, which, during operation, faces the flowing cooling water,
g) the outer webs (20) are constructively identical and mutually-opposite outer webs (20) are arranged in a mirror-symmetrical manner with respect to a central plane (21) extending in the axial direction,
h) the flow-guiding structural part (8) forms, at most for a number of fuel rods (2) that is smaller than the overall number of fuel rods in the fuel assembly, cells (27) through which each fuel rod (2) is guided, wherein,
i) the number of these cells (27), which are located in a row (14) or column (16), is smaller than the number of fuel rods that are each located in the row (14) or column (16).

2. Fuel assembly according to claim 1, wherein the cells (27) formed by the structural part (8) are located exclusively in corner regions of the fuel assembly.

3. Fuel assembly according to claim 1 or 2, wherein the outer webs (20) are arranged at the lateral edge of the fuel assembly.

4. Fuel element according to claim 1, 2 or 3, wherein the outer webs (20) form a contiguous frame.

5. Fuel assembly according to one of claims 1 to 4, wherein an inner web (26) is assigned to each outer web (20) and runs parallel thereto, which has deflector vanes (30) pointing towards the inner region (24) added to them on its lower longitudinal side facing the flowing cooling water (K), wherein the inner webs (26) are constructively identical and mutually-opposite inner webs (26) are arranged in a mirror-symmetrical manner with respect to a central plane (21) extending in the axial direction.

6. Fuel assembly according to claim 5, wherein only fuel rods (2) of a row (14) or line (16) are arranged between the outer web (20) and the inner web (26).

7. Fuel assembly according to claim 5 or 6, wherein the lower longitudinal side of the inner web (26) is arranged beneath the lower longitudinal side of the outer web (20).

8. Fuel assembly according to one of claims 5 to 7, wherein the inner webs (26) form a contiguous frame.

## Revendications

1. Assemblage combustible pour un réacteur nucléaire à eau sous pression, avec les caractéristiques suivantes :
a) une pluralité de crayons combustible (2) est guidée dans plusieurs espaceurs (6), dans la direction d'un axe longitudinal médian (4),
b) les espaceurs (6) forment respectivement une grille carrée constituée de traverses de grille (10), avec une multitude de cellules (12),
c) les cellules (12) sont agencées en lignes (14) et en colonnes (16),
d) une pièce de structure (8) destinée à guider l'écoulement est agencée entre deux espaceurs (6) axialement adjacents,
e) la pièce de structure (8) destinée à guider l'écoulement comprend quatre traverses externes (20) entourant une zone intérieure carrée (24) dont le point central (M) se trouve sur l'axe longitudinal médian (4), dans un plan orienté perpendiculairement à l'axe longitudinal médian (4),
f) de leur côté longitudinal inférieur tourné vers l'eau de refroidissement en écoulement pendant le fonctionnement, les traverses externes (20) sont pourvues de déflecteurs (30) orientées vers la zone intérieure,
g) les traverses externes (20) présentent une construction identique, et les traverses externes (20) opposées sont disposées symétriquement par rapport à un plan médian (21) s'étendant dans la direction axiale,
h) la pièce de structure (8) destinée à guider l'écoulement forme des cellules (27) à travers chacune desquelles est guidée respectivement un crayon combustible (2), au plus pour un nombre de crayons combustible (2) inférieur à leur nombre total dans l'assemblage combustible, dans lequel
i) le nombre de ces cellules (27) se trouvant dans une ligne (14) ou une colonne (16) est inférieur au nombre d'assemblages combustible se trouvant respectivement dans cette ligne (14) ou cette colonne (16).

2. Assemblage combustible selon la revendication 1, dans lequel les cellules (27) formées par la pièce de structure (8) se trouvent exclusivement dans les zones de coin de l'assemblage combustible.

3. Assemblage combustible selon la revendication 1 ou 2, dans lequel les traverses externes (20) sont agencées sur le bord latéral de l'assemblage combustible.

4. Assemblage combustible selon la revendication 1, 2 ou 3, dans lequel les traverses externes (20) forment un cadre solidarisé.

5. Assemblage combustible selon l'une des revendications 1 à 4, dans lequel une traverse interne (26) pourvue de déflecteurs (30) orientés vers la zone intérieure (24) sur son côté longitudinal inférieur tourné vers l'eau de refroidissement (K) en écoulement est attribuée à chaque traverse externe (20) en s'étendant parallèlement à celle-ci, dans lequel les traverses internes (26) présentent une construction identique et les traverses internes (26) opposées sont agencées symétriquement par rapport à un plan médian (21) s'étendant dans la direction axiale.

6. Assemblage combustible selon la revendication 5, dans lequel seuls les crayons combustible (2) d'une ligne (14) ou d'une colonne (16) sont agencés entre la traverse externe (20) et la traverse interne (26).

7. Assemblage combustible selon la revendication 5 ou 6, dans lequel le côté longitudinal inférieur de la traverse interne (26) est agencé en-dessous du côté longitudinal de la traverse externe (20).

8. Assemblage combustible selon l'une des revendications 5 à 7, dans lequel les traverses internes (26) forment un cadre solidarisé.
